# EUROPEAN PATENT APPLICATION

(11) **EP 1 478 152 A2**
(43) Date of publication of application: **17.11.2004**
(21) Application number: 04010838.3
(22) Date of filing: 06.05.2004
(51) Int. Cl.: H04L 29/00

(54) **Mobile unit, data transmission/reception method, and data transmission/reception program**

(30) Priority: 13.05.2003 JP 2003134898
(71) Applicant: NTT DoCoMo, Inc., Tokyo 100-6150 (JP)
(72) Inventor: Nishida, Masakazu, 2-11-1 Nagata-cho Chiyoda Tokyo 100-6150 (JP); Watanabe, Nobuyuki, 2-11-1 Nagata-cho Chiyoda Tokyo 100-6150 (JP); Hattori, Yasunori, 2-11-1 Nagata-cho Chiyoda Tokyo 100-6150 (JP); Toyama, Sumiro, Naka-ku, Yokahama-shi, Kanagawa 231-8554 (JP)
(74) Representative: GROSSE BOCKHORNI SCHUMACHER

(57) **Abstract**

A mobile unit 10 according to the present invention is provided with a noncontact IC chip 10b, a virtual IC chip area 12, and a virtual IC chip switch 14. The virtual IC chip area 12 retains a plurality of content data elements used in execution of a plurality of application programs, in connection with the respective application programs. The virtual IC chip switch 14 transfers a content data element corresponding to an application program selected, from the virtual IC chip area 12 to the noncontact IC chip 10b. This allows the mobile unit 10 and the reader/writer device 20 to achieve transmission/reception of the content data element between them.

## Description

### BACKGROUND OF THE INVENTION

### Field of the Invention

The present invention relates to a mobile unit, a data transmission/reception method, and a data transmission/reception program.

### Related Background Art

Conventionally, noncontact type IC cards are in practical use to transmit and receive data by use of a weak radio wave transmitted from a reader/writer as an external terminal. A user can exchange desired information by a simple operation of bringing an IC card to near the reader/writer, and thus such IC cards are used in various applications, such as payment of transportation fees, in/out management at companies, and so on (e.g., cf. Patent Document 1).

[Patent Document 1] JP-A-9-510812

### SUMMARY OF THE INVENTION

Portable terminals such as mobile units proposed heretofore also include those equipped with a chip element having the function of the IC card described above, as an IC chip. The IC chip can internally store content data used in execution of application programs (hereinafter referred to simply as "applications") operable in the mobile unit. When an application is started, a corresponding content data element is read once from a built-in memory of the mobile unit into a storage area formed in the IC chip and then is transmitted to and received by the reader/writer outside the mobile unit.

Normally, the storage area formed in the IC chip is in 1:1 correspondence to the application and content data element used in the application. For this reason, the IC chip is configured to secure content data storage areas in the number equal to the number of applications. On the other hand, services to transmit and receive content data through the use of the noncontact IC chip are spreading, e.g., commuter passes, membership card services, and so on, and applications adapted for the noncontact IC chip are also increasing.

It is thus desirable to increase the number of areas for storage of content data in the IC chip as much as possible. It is, however, the present status that there is a limit on the number of storage areas that can be formed in an IC chip and that the data storage capacity of an IC chip is not sufficient to store a large volume of content data all at once. Therefore, there were cases where, while a user of a mobile unit wanted to use many applications adapted for the noncontact IC chip, the user had to give up using some of the applications.

An object of the present invention is therefore to lift the limitation on the number of application programs operable with the noncontact IC chip and thereby improve convenience of the mobile unit.

A mobile unit according to the present invention is a mobile unit equipped with a noncontact IC chip, comprising: storage means for storing a plurality of application programs; retaining means for retaining content data elements used in execution of the respective application programs stored in the storage means, in connection with the respective application programs; selecting means for selecting an application program out of the plurality of application programs; and transferring means for transferring a content data element corresponding to the application program selected by the selecting means, from the retaining means to the noncontact IC chip.

A data transmission/reception method according to the present invention is a data transmission/reception method for a mobile unit equipped with a noncontact IC chip, to carry out data communication with an external terminal, the data transmission/reception method comprising: a selecting step wherein selecting means of the mobile unit selects an application program out of a plurality of application programs stored in storage means; and a transferring step wherein transferring means of the mobile unit transfers a content data element corresponding to the applicationprogramselectedbytheselecting means,from retaining means which retains content data elements used in execution of the respective application programs stored in the storage means, in connection with the respective application programs, to the noncontact IC chip.

A data transmission/reception program according to the present invention is a data transmission/reception program which can be executed by a mobile unit equipped with a noncontact IC chip, the data transmission/reception program being configured to make the mobile unit substantialize: a selecting function of selecting an application program out of a plurality of application programs stored in storage means; and a transferring function of transferring a content data element corresponding to the application program selected by the selecting function, from retaining means which retains content data elements used in execution of the respective application programs stored in the storage means, in connection with the respective application programs, to the noncontact IC chip.

According to these aspects of the invention, the mobile unit is configured to preliminarily store a plurality of applications in connection with a plurality of content data elements. When an arbitrary application is selected, a content data element corresponding to this application is appropriately read into the noncontact IC chip. Namely, the noncontact IC chip is not constantly occupied by one content data element, but is shared by content data elements read from the retaining means in accordance with selected applications.

Therefore, it is not always necessary to secure storage areas for the content data elements corresponding to the plurality of applications, in the noncontact IC chip. This enables the mobile unit to use a variety of applications and content data elements through the use of the noncontact IC chip which usually has a small data storage capacity. As a result, it is feasible to lift the limitation to the number of applications operable with the noncontact IC chip and to improve the convenience of the mobile unit.

In the mobile unit according to the present invention, preferably, the selecting means orders a switchover of an application program to be used, andwhen the selecting means orders the switchover of the application program, the transferring means transfers a content data element in the noncontact IC chip to the retaining means and transfers a content data element corresponding to an application program after the switchover, from the retaining means to the noncontact IC chip.

In the data transmission/reception method according to the present invention, preferably, the selecting step is a step wherein the selecting means orders a switchover of an application program to be used, and the transferring step is a step wherein, when the selecting means orders the switchover of the application program, the transferring means transfers a content data element in the noncontact IC chip to the retaining means and transfers a content data element corresponding to an application program after the switchover, from the retaining means to the noncontact IC chip.

In the data transmission/reception program according to the present invention, preferably, the selecting function is to order a switchover of an application program to be used, and the transferring function is to, when the switchover of the application program is ordered by the selecting function, transfer a content data element in the noncontact IC chip to the retaining means and transfer a content data element corresponding to an application program after the switchover, from the retaining means to the noncontact IC chip.

According to these aspects of the invention, in conjunction with the order of the switchover of the application, the content data element in the noncontact IC chip is transferred to the retaining means and the content data element corresponding to the application after the switchover is transferred from the retaining means to the noncontact IC chip. Namely, the content data element stored in the noncontact IC chip is replaced with another. This permits the mobile unit to use various applications and content data elements and to avoid existence of multiple content data elements in the noncontact IC chip. Therefore, it is feasible to effectively utilize the noncontact IC chip with the limited data storage capacity.

The selecting means may be configured to select an application in accordance with an operation by the user of the mobile unit or the mobile unit may be configured to automatically select an application on the occasion of reception of a signal from an external terminal. Namely, the data transmission/reception technology according to the present invention is applicable not only to ordinary applications adapted for only manual activation, but also to applications adapted for automatic activation (external activation).

The present invention lifts the limit on the number of application programs operable with the noncontact IC chip, and improves the convenience of the mobile unit.

The present invention will become more fully understood from the detailed description given herein below and the accompanying drawings which are given by way of illustration only, and thus are not to be considered as limiting the present invention.
Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

### BRIEF DESCRIPTION OF THE DRAWINGS

Fig. 1 is a block diagram schematically showing a configuration of a mobile unit.
Fig. 2A is an illustration showing a data storage example in an application storage. Fig. 2B is an illustration showing a data storage example in a virtual IC chip area.
Fig. 3 is a flowchart for explaining content data transmission/reception processing in the first embodiment.
Fig. 4A to Fig. 4D are state transition diagrams conceptually showing states of transmission and reception of content data by a mobile unit in the first embodiment.
Fig. 5 is a flowchart for explaining content data transmission/reception processing in the second embodiment.
Fig. 6A to Fig. 6C are state transition diagrams conceptually showing states of transmission and reception of content data by a mobile unit in the second embodiment.
Fig. 7 is an illustration showing a configuration example of a data transmission/reception program recorded in a recording medium.

### DESCRIPTION OF THE PREFERRED EMBODIMENTS

### First Embodiment

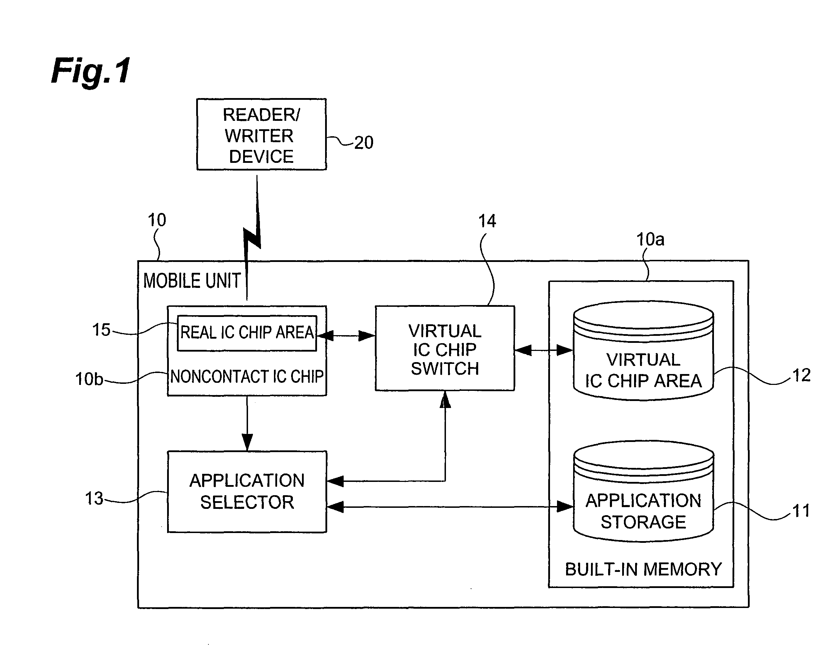

The first embodiment of the present invention will be described below with reference to the accompanying drawings.
First, the configuration will be described. Fig. 1 is a block diagram showing the configuration of mobile unit 10 according to the present invention. The mobile unit 10 is, for example, a cell phone, but may be any information equipment with communication function like PHS (Personal Handyphone System) , PDA Personal Digital Assistance), and so on. When the mobile unit 10 is located within a predetermined distance from reader/writer device 20 (corresponding to an external terminal), short-range wireless communication becomes possible with the reader/writer device 20. The short range herein is, for example, about 10 cm. The short-range wireless communication is, for example, infrared communication including IrDA (Infrared Data Association), or communication implemented by Bluetooth (registered trademark).

Each of components of the mobile unit 10 will be described below.
As shown in Fig. 1, the mobile unit 10 is functionally comprised of application storage 11 (corresponding to the storage means), virtual IC chip area 12 (corresponding to the retaining means), application selector 13 (corresponding to the selecting means), virtual IC chip switch 14 (corresponding to the transferring means), and real IC chip area 15. These parts are coupled each through a bus so as to be able to feed and receive various signals.

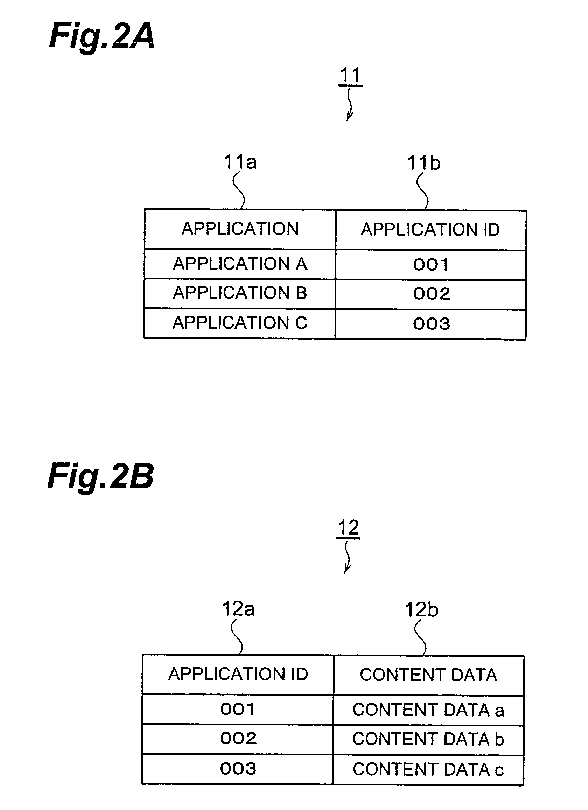

The application storage 11 is physically constructed of built-in memory 10a such as an EEPROM (Electrically Erasable and Programmable Read Only Memory). The application storage 11 has application area 11a and application ID area 11b, as shown in Fig. 2A. The application area 11a stores application programs (e.g., applications A, B, and C). The application ID area 11b stores application IDs (e.g., 001, 002, and 003) uniquely assigned to identify the respective application programs, in connection with the corresponding application programs.

The virtual IC chip area 12 is physically constructed of built-in memory 10a such as an EEPROM. The virtual IC chip area 12 has application ID area 12a and content data area 12b, as shown in Fig. 2B. The application ID area 12a stores the aforementioned application IDs (e.g., 001, 002, and 003). The content data area 12b retains content data elements (e.g., content data elements a, b, and c) in connection with the corresponding application IDs.

Namely, the applications and content data elements are stored in 1: 1 correspondence through the application IDs in the built-in memory 10a. A specific example of the applications and content data elements is as follows. Application A is an application for using the mobile unit 10 as a substitute for a commuter pass, and content data element a in this case is a permitted commute zone, a period of validity, and so on. Application B is an application for using the mobile unit 10 in electronic settlement, and content data element b electronic money. Application C is an application for using the mobile unit 10 as a substitute for a membership card, and content data element c membership information.

In response to selection of an application by the user of the mobile unit 10 or to an order of a switchover, the application selector 13 activates the selected application or an application after the switchover. At the same time, the application selector 13 acquires an application ID corresponding to the activated application, from the application storage 11. Furthermore, the application selector 13 notifies the virtual IC chip switch 14 of the acquired application ID.

When the virtual IC chip switch 14 is notified of the application IDby the application selector 13, it acquires a content data element corresponding to the application ID from the virtual IC chip area 12. The virtual IC chip switch 14 outputs the acquired content data element to the real IC chip area 15. Namely, the virtual IC chip switch 14 properly switches the storage area of the content data element used, to another in accordance with the selected application.

The real IC chip area 15 is physically constructed of noncontact IC chip 10b such as an IC (Integrated Circuit) chip. When detecting a data transmission request from the external reader/writer device 20, the real IC chip area 15 transmits a content data element fed from the virtual IC chip switch 14, through a radio channel to the reader/writer device 20.

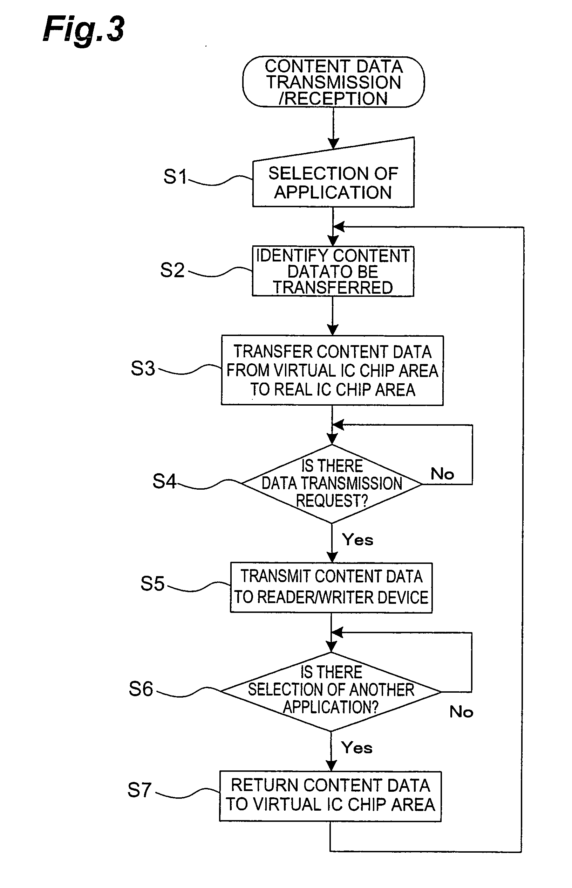

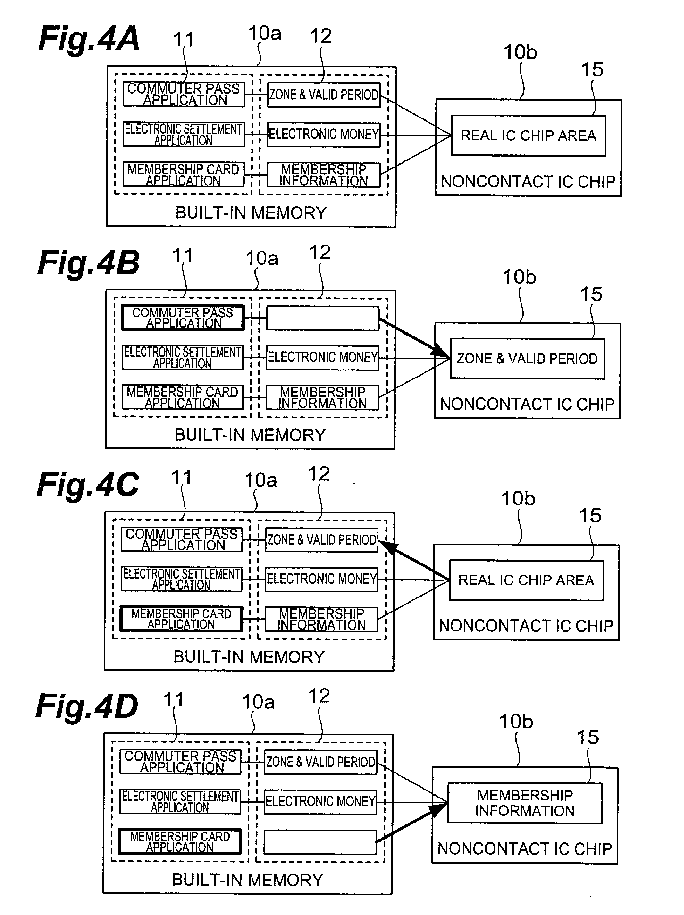

The operation of mobile unit 10 will be described below with reference to Fig. 3 and Figs. 4A to 4D. In addition, each of steps constituting the data transmission/reception method according to the present invention will be described. Fig. 3 is a flowchart for explaining the content data transmission/reception processing.

Fig. 4A is an illustration conceptually showing a state inside the built-in memory 10a and inside the noncontact IC chip 10b before a start of execution of the content data transmission/reception processing (an initial state). As shown in Fig. 4A, the content data elements of the zone and valid period, electronic money, and membership information are correlated with the respective applications of the commuter pass application, the electronic settlement application, and the membership card application. These content data elements are alternatively transferable in conjunction with selection of any one application to the real IC chip area 15.

First, when the user of the mobile unit 10 selects an application program through an input operation button, the application selector 13 acquires an application ID of the application from the application storage 11 (S1).

At S2, the virtual IC chip switch 14 acquires the application ID from the application selector 13, whereupon it identifies a content data element as a target to be transferred, based on this application ID.

Subsequently, the virtual IC chip switch 14 acquires the content data element identified as a target to be transferred at S2, from the virtual IC chip area 12 and transfers this content data element to the real IC chip area 15 (S3). This process completes a preparation for transmission and reception of the content data element from the mobile unit 10 to the external reader/writer device 20. For example, Fig. 4B shows a state in which, in conjunction with selection of the commuter pass application, the content data element of zone and valid period has been transferred to the real IC chip area 15.

At S4, the real IC chip area 15 awaits a transmission request for the content data element from the reader/writer device 20 to the mobile unit 10. When the mobile unit 10 is located within the predetermined distance from the reader/writer device 20 and detects the transmission request (S4; Yes) , the real IC chip area 15 transmits the content data element via a radio channel to the reader/writer device 20 (S5).

After completion of the transmission of the content data element, the application selector 13 awaits selection of another application different from the application selected at S1 (a switchover of the application). When the user of mobile unit 10 switches the application to another, the application selector 13 acquires an application ID of the application from the application storage 11 (S6).

At S7, the virtual IC chip switch 14 returns the content data element presently stored in the real IC chip area 15, to the virtual IC chip area 12 to secure a free space for data in the real IC chip area 15. For example, Fig. 4C shows a state in which, in conjunctionwith a switchover from the commuter pass application to the membership card application, the content data element of zone and valid period has been returned to the built-in memory 10a.

Without having to be limited to the case of the switchover of application, the virtual IC chip switch 14 may also be configured to return the content data element to the virtual IC chip area 12, without awaiting selection of a new application, when a running application is ended.

When a free space is secured in the real IC chip area 15, the processing returns to S2 to repeatedly execute the steps at and after S2 for the newly selected application. Namely, when the virtual IC chip switch 14 acquires a new application ID from the application selector 13, it identifies a content data element as a target to be transferred, based on this application ID (S2).

Subsequently, the virtual IC chip switch 14 acquires the content data element identified as a target to be transferred at S2, from the virtual IC chip area 12 and transfers this content data element to the real IC chip area 15 (S3). This process completes a preparation for transmission and reception of the new content data element to the external reader/writer device 20. For example, Fig. 4D shows a state in which, in conjunction with a switchover to the membership card application, the content data element of membership information has been transferred to the real IC chip area 15.

In the mobile unit 10 according to the present invention, as described above, the plurality of applications are stored in connection with the plurality of content data elements in the built-in memory 10a. When an arbitrary application is selected, the mobile unit 10 reads a content data element corresponding to this application from the built-in memory 10a into the noncontact IC chip 10b. This prevents the noncontact IC chip 10b from being constantly occupied by one content data element, so that the noncontact IC chip 10b is sharedby content data elements according to applications selected.

Accordingly, the mobile unit 10 does not necessarily secure areas for storage of a plurality of content data elements all at once in the noncontact IC chip 10b. This enables the mobile unit 10 to utilize various applications and content data elements through the use of the noncontact IC chip 10b usually having a small data storage capacity.

### Second Embodiment

The second embodiment of the present invention will be described below with reference to the accompanying drawings. In the mobile unit 10 in the first embodiment, the selection of an application was conducted according to an operation of an order made by the user. In contrast to it, in the present embodiment, the mobile unit 10 automatically selects an application on the occasion of reception of a signal transmitted from a reader/writer device as an external terminal.

The mobile unit in the second embodiment has the basic configuration similar to that of the mobile unit 10 detailed in the first embodiment. Therefore, the mobile unit and its components will be denoted by the same reference symbols, without description thereof,and only differencesfrom thefirst embodiment will be described below in detail.

The real IC chip area 15 receives a transmission request for a content data element from the reader/writer device 20. This transmission request contains identification information indicating a type of a service with the reader/writer device 20, and the real IC chip area 15, receiving this identification information, outputs it to the application selector 13.

The application selector 13, receiving the identification information from the real IC chip area 15, selects an application corresponding to the reader/writer device 20, based on this identification information. This selection process is carried out without need for a hand of the user of the mobile unit 10.

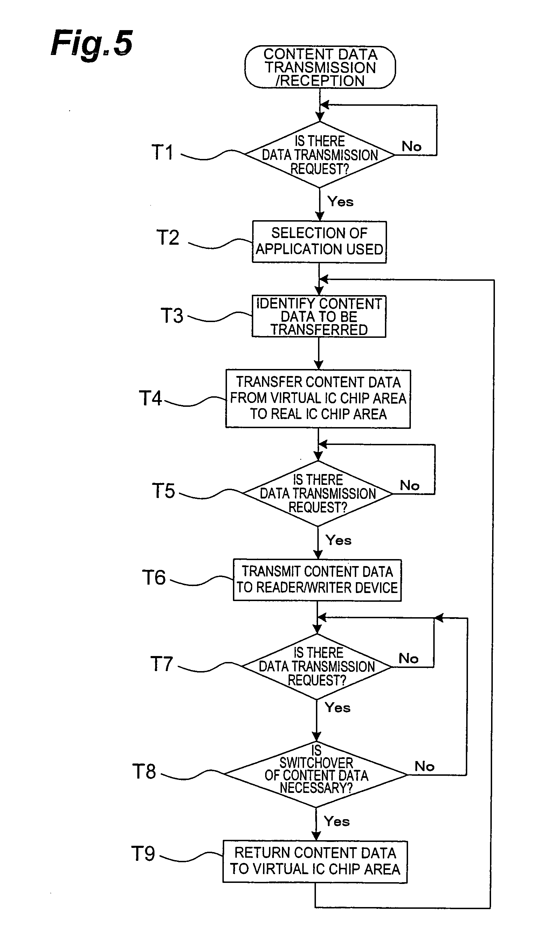

The content data transmission/reception processing in the second embodiment will be described below with reference to Fig. 5. The present content data transmission/reception processing is basically similar to the content data transmission/reception processing detailed in the first embodiment (cf. Fig. 3).
Specifically, processes at T1, T3-T6, T7, and T9 in Fig. 5 correspond to the processes at S4, S2-S5, S4, and S7, respectively, in Fig. 3.

The steps at T2 and T8, which are differences from the content data transmission/reception processing in the first embodiment, will be described below.
Namely, at T2, the application selector 13 determines a service type from the identification information in the data transmission request acquired by the real IC chip area 15 at T1, and selects an application corresponding to the service type. The reader/writer device 20 notifies the mobile unit 10 through the data transmission request, of the type of the service for which the reader/writer device 20 itself serves as part of a providing entity. Therefore, the mobile unit 10 can receive the service belonging to the service type, by executing the application identified by the service type.

At T8, the application selector 13 determines a service type from identification information in a data transmission request acquired by the real IC chip area 15 at T7, and determines whether a switchover of content data is necessary, based on the service type.

Specifically, where an application identified by the above service type is identical with the application presently used, the mobile unit 10 determines that there is no need for a switchover of content data, because the content data now in use in the real IC chip area 15 can be continuously used. On the other hand, where the application identified by the service type is different from the application presently used, the mobile unit determines that it is necessary to perform a switchover of content data in the real IC chip area 15, in order to set a content data element corresponding to the newly selected application.

When it is determined that a switchover of content data is necessary (T8; Yes), the processing transfers to the steps at and after T9. Namely, the virtual IC chip switch 14 returns the content data element presently stored in the real IC chip area 15, to the virtual IC chip area 12 to secure a free space for data in the real IC chip area 15. On the other hand, when it is determined that there is no need for a switchover of content data (T8; No), the processing returns to T7 to again await a transmission request for content data.

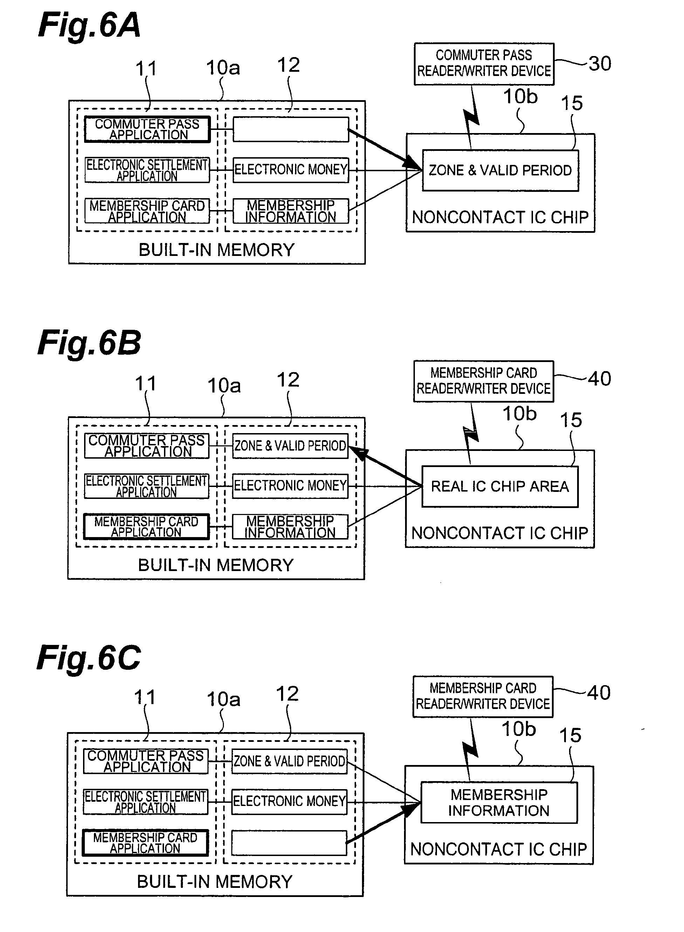

States of transmission and reception of content data will be described below as a specific processing example of the mobile unit in the second embodiment, with reference to Fig. 4A and Figs. 6A to 6C.
Again referring to Fig. 4A, the content data elements of the zone and valid period, electronic money, and membership information are stored in connection with the respective applications of the commuter pass application, electronic settlement application, and membership card application. These content data elements are alternatively transferable in conjunction with selection of any one application to the real IC chip area 15.

When the mobile unit 10 is locatednear a reader/writer device 30 which provides the commuter pass service in collaboration with the commuter pass application, the commuter pass application is activated. In conjunction therewith, the content data element of zone and valid period is transferred from the built-in memory 10a to the real IC chip area 15 to be retained there, as shown in Fig. 6A. Thereafter, this content data element is transmitted through a radio channel to the commuter pass reader/writer device 30.

When the mobile unit 10 is locatednear another reader/writer device 40 which provides the membership card service in collaboration with the membership card application, the membership card application is activated. In conjunction therewith, the content data element of zone and valid period retained in the real IC chip area 15 is returned from the real IC chip area 15 to the built-in memory 10a, as shown in Fig. 6B. As a result, a free space for retaining another content data element (membership information) is secured in the real IC chip area 15.

Thereafter, as shown in Fig. 6C, the content data element of membership information is transferred from the built-in memory 10a to the real IC chip area 15 to be retained there. This content data element is transmitted through a radio channel to the membership card reader/writer device 40.

In the mobile unit 10 in the second embodiment, as described above, an application suiting a service content provided is automatically selected and started on the occasion of reception of a signal transmitted from a reader/writer device, different from the mobile unit described in the first embodiment. Namely, the data transmission/reception technology according to the present invention is applicable not only to the ordinary applications, but also to applications automatically started when the mobile unit 10 is located in their service area. The applications with the automatic start function save the user of the mobile unit 10 the trouble of starting an application and the trouble of personally selecting an appropriate application and switching the application thereto. As a result, it enhances the convenience of mobile unit 10 for the user to utilize various services.

The forms described above in the respective embodiments are just the preferred examples of the data transmission/reception system according to the present invention, and the present invention is by no means intended to be limited to these.
For example, the embodiments showed the examples in which there were only three types of applications stored in the application storage 11 and content data elements retained in the virtual IC chip area 12, for simplification of description, but the number of applications and content data elements can be appropriately changed.

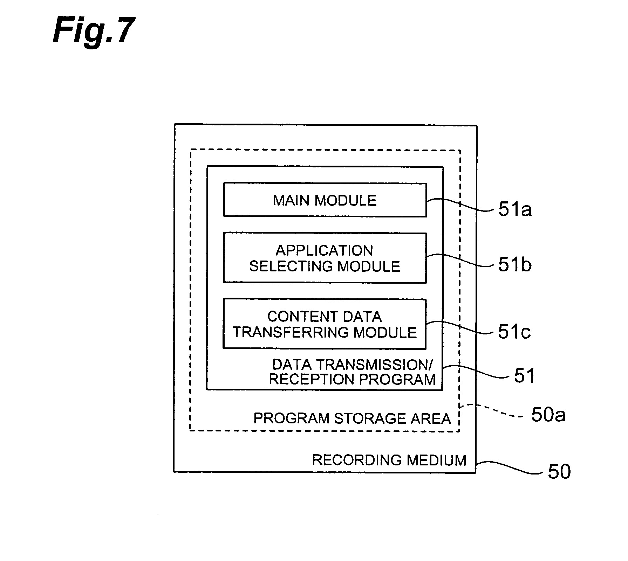

Finally, a data transmission/reception program according to the present invention will be described below.
The data transmission/reception program 51 is stored in a program storage area 50a of a recording medium 50. The data transmission/reception program 51 is a program for controlling data communicationbetweenmobile unit 10 and reader/writer device 20. As shown in Fig. 7, the data transmission/reception program 51 is comprised of main module 51a for totally controlling the processing, application selecting module 51b, and content data transferring module 51c.

The application selecting module 51b makes the mobile unit 10 execute a process of selecting an application out of a plurality of applications stored in the application storage 11. The content data transferring module 51c makes the mobile unit 10 execute a process of transferring a content data element corresponding to the application selected by the above process, from the virtual IC chip area 12 to the real IC chip area 15 formed in the noncontact IC chip 10b.

Preferably, the application selecting module 51b makes the mobile unit 10 further execute a process of ordering a switchover of an application used. The content data transferring module 51c makes the mobile unit 10 execute a process of, when a switchover of an application is ordered by the above process, transferring a content data element in the noncontact IC chip 10b to the virtual IC chip area 12 and transferring a content data element corresponding to an application after the switchover, from the virtual IC chip area 12 to the real IC chip area 15.

Here the function substantialized when the mobile unit 10 executes the application selecting module 51b (corresponding to the selecting function) is similar to the function of the application selector 13. The function substantialized when the mobile unit 10 executes the content data transferring module 51c (corresponding to the transferring function) is similar to the function of the virtual IC chip switch 14.

Furthermore, the mobile unit 10 may also be configured to receive and record part or all of the data transmission/reception program 51 through a transmission medium such as a communication line from another device. Conversely, the mobile unit 10 may be configured to transmit the data transmission/reception program 51 through a transmission medium to install it in another device.

From the invention thus described, it will be obvious that the embodiments of the invention may be varied in many ways. Such variations are not to be regarded as a departure from the spirit and scope of the invention, and all such modifications as would be obvious to one skilled in the art are intended for inclusion within the scope of the following claims.

## Claims

1. A mobile unit equipped with a noncontact IC chip, comprising:
storage means for storing a plurality of application programs;
retaining means for retaining content data elements used in execution of the respective application programs stored in the storage means, in connection with the respective application programs;
selecting means for selecting an application program out of the plurality of application programs; and
transferring means for transferring a content data element corresponding to the applicationprogram selectedby the selecting means, from the retaining means to the noncontact IC chip.

2. The mobile unit according to Claim 1, wherein the selecting means orders a switchover of an application program to be used, andwherein, when the selectingmeans orders the switchover of the application program, the transferring means transfers a content data element in the noncontact IC chip to the retaining means and transfers a content data element corresponding to an application program after the switchover, from the retaining means to the noncontact IC chip.

3. A data transmission/reception method for a mobile unit equipped with a noncontact IC chip, to carry out data communication with an external terminal, the data transmission/reception method comprising:
a selecting step wherein selecting means of the mobile unit selects an application program out of a plurality of application programs stored in storage means; and
a transferring step wherein transferring means of the mobile unit transfers a content data element corresponding to the application programselected bytheselecting means,from retaining means which retains content data elements used in execution of the respective application programs stored in the storage means, in connection with the respective application programs, to the noncontact IC chip.

4. A data transmission/reception program which can be executed by a mobile unit equipped with a noncontact IC chip, the data transmission/reception program being configured to make the mobile unit substantialize:
a selecting function of selecting an application program out of a plurality of application programs stored in storage means; and
a transferring function of transferring a content data element corresponding to the application program selected by the selecting function, from retaining means which retains content data elements used in execution of the respective application programs stored in the storage means, in connection with the respective application programs, to the noncontact IC chip.
